# EUROPEAN PATENT SPECIFICATION

(11) **EP 2 630 779 B1**
(45) Date of publication and mention of the grant of the patent: **06.05.2015**
(21) Application number: 11768025.6
(22) Date of filing: 13.10.2011
(51) Int. Cl.: H04M 1/66, H04L 9/32, H04W 8/18, H04M 1/2745

(54) **CHIP CARD FOR A MOBILE TELECOMMUNICATION DEVICE**
CHIPKARTE FÜR EINE MOBILE TELEKOMMUNIKATIONSVORRICHTUNG
CARTE À PUCE DESTINÉE À UN DISPOSITIF DE TÉLÉCOMMUNICATION MOBILE

(30) Priority: 19.10.2010 EP 10188050
(43) Date of publication of application: 28.08.2013
(73) Proprietor: Morpho Cards GmbH, 24220 Flintbek (DE)
(72) Inventor: WINTER, Christian, 33378 Rheda-Wiedenbrück (DE)
(74) Representative: Richardt Patentanwälte PartG mbB
(86) International application number: PCT/EP2011/067916
(87) International publication number: WO 2012/052355

(56) References cited:
- EP-A1- 2 209 329
- "Digital cellular telecommunications system (Phase 2+); Specification of the Subscriber Identity Module - Mobile Equipment (SIM-ME) Interface (3GPP TS 11.11 version 8.14.0 Release 1999); ETSI TS 100 977", ETSI STANDARDS, LIS, SOPHIA ANTIPOLIS CEDEX, FRANCE, vol. 3-T3;SMG9, no. V8.14.0, 1 June 2007 (2007-06-01), XP014037551, ISSN: 0000-0001 cited in the application

## Description

### Field of the invention

The invention relates to the field of chip cards, more specifically to chip cards for mobile telecommunication devices.

### Background and related art

A chip card in a mobile telecommunication device may for example be a subscriber identity module (SIM) or a universal subscriber identity module (USIM). The SIM prevents an application executed on the mobile telecommunication device from accessing data on the SIM except for short message service (SMS) data and contact data. In other words, an application executed on the mobile telecommunication device has only access to SMS messages and contact data stored on the SIM. Contact data may for example be names of persons with associated telephone numbers, mail addresses and/or street addresses.

The SMS data and the contact data are stored in so called elementary files as specified e.g. in GSM 11.11 and 11.14. The SIM allows an application executed on the mobile telecommunication device only to read and store data from and to the elementary files of the SMS messages and the contact data.

EP2209329 A1 discloses a method of handling a set of security parameters or mobility management parameters which are used in the communication between a mobile device and a mobile communications network.

### Summary

It is an object of the invention to provide an improved method of storing data on a chip card, an improved chip card, and an improved mobile telecommunication device.

These objects are achieved by the method, the chip card, and the mobile telecommunication device according to the independent claims. Embodiments of the invention are given in the dependent claims.

The invention relates to a method of storing data on a chip card for a mobile telecommunication device. The chip card comprises a data storage. The data storage comprises a first and a second data storage portion. The first data storage portion is a volatile storage and the second data storage portion is a non-volatile storage. A plurality of first elementary files is provided in the second data storage portion. In other words, the plurality of first elementary files is stored in the non-volatile storage.

The method comprises storing data in the first data storage portion in a second elementary file. Said second elementary file is defined as comprising first type data. The definition of the data type may for example be performed by the file type of the second elementary file. If, for example, an elementary file for storing contact data is used for storing the data in the first storage portion, the first type data is contact data such as addresses, names, email addresses, and/or telephone numbers. If, for example, an elementary file for SMS is used for storing the data in the first data storage portion, the first type data is text message data. It is to be noted that the data stored in the first data storage portion does not have to be first type data. Said data is second type data. The first type data is not equivalent to the second type data. In other words, second type data is not contact data and/or text message data. Said data comprises first information. The first information is indicative of said second elementary file being invalid.

By adding the first information to the data it is avoided that the data is displayed to a user via display means of the mobile telecommunication device. The data is stored in the second elementary file, which is adapted for being read by an application executed on the mobile telecommunication device. When the data is read by an application for contact data and/or text message data, the first information is also read by the application and the application avoids displaying the data being defined as invalid.

Second information is also provided. The second information is preferably also comprised by the second elementary file. The second information is indicative of said second elementary file comprising second type data. The combination of the first and the second information being present with respect to the data is indicative of the data being valid. In other words, data being stored in the second elementary file and comprising first information is not always invalid data. The first information being present means that the data is either invalid first type data or may also be valid second type data. If the data is valid second type data, the second information is also present.

In other words, the second elementary file is used for storing second type data. Additionally, the first and the second information is stored in the second elementary file which indicates to an application executed on the mobile telecommunication device that the second elementary file does not comprise first type data but second type data. This is for example advantageous when an application executed on the mobile telecommunication device wants to store and/or read data on and/or from the chip card. The application may then use the second elementary file as an input/output buffer. In other words, data which is intended to be stored in one of the plurality of first elementary files by the application executed on the mobile telecommunication device is first stored in the second elementary file and defined as being valid second type data by storing also the first and the second information in the second elementary file. The data may then be read by an application executed on the chip card.

The second elementary file may also be used as an input/output buffer for data transmission from an application executed on the chip card to an application executed on the mobile telecommunication device. The chip card stores the data to be transmitted to the application executed on the mobile telecommunication device in the second elementary file and defines the data as being valid second type data. Here again the second elementary file is used for storing second type data although the second elementary file is defined as comprising first type data. For example the second elementary file may be a contact file for storing contact data such as telephone numbers, email addresses, names, and/or addresses. The application executed on the chip card may store second type data in the second elementary file. The second type data may for example be security relevant data such as a personal identification number (PIN), a username, and/or a password. Additionally the first and the second information are stored in the second elementary file. The application executed on the mobile telecommunication device may then read the data from the second elementary file. By reading the first and the second information the application knows that the data stored in the second elementary file is valid second type data.

Using the second elementary file as an input/output buffer for communication between an application executed on the chip card and an application executed on the mobile telecommunication device is advantageous because direct data transmission between an application executed on the chip card and an application executed on the mobile telecommunication device is not possible with common chip cards.

Communication between an application executed on the mobile telecommunication device and an application executed on the chip card may for example be advantageous when the mobile telecommunication device application has to perform safety relevant procedures such as PIN generation, key generation, and/or password generation. The chip card application could for example store a generated key or PIN in the second elementary file, which is then read by the mobile telecommunication device application. Such a procedure is advantageous because data stored and/or generated in and/or by the chip card is better protected against possible manipulation than data generated and/or stored by and/or in the mobile telecommunication device.

According to embodiments of the invention said second information is a file number of the second elementary file. In other words, always the same second elementary file is used as the input/output buffer. Thus, it is clear that the second elementary file with this file number never contains first type data. If data is present in the second elementary file with this file number, it is second type data.

According to embodiments of the invention the second information is at least one bit of said data. In other words, for example the first or the last bit of the data being stored in the second elementary file is indicative of the second elementary file containing second type data.

According to embodiments of the invention the second elementary file is stored in the first data storage portion. The first data storage portion is a volatile storage. Storing the data in the volatile storage is advantageous for a faster data transmission. Data in a volatile storage is stored and read faster than in a non-volatile storage. The second elementary file is used as an input/output buffer. This means that the data is written frequently into the second elementary file. Storing the second elementary file in the volatile storage is advantageous for a longer lifetime of the storage, because a volatile storage allows storing the data more often than a non-volatile storage. Because the second elementary file is used as an input/output buffer the limited storage time of the data in the volatile storage is no significant disadvantage. Preferably the data is read after having been stored a short time ago.

According to embodiments of the invention the first type data is address data and/or text message data. Text message data is equivalent to short message service data (SMS).

According to embodiments of the invention the second elementary file is an address book file and/or a text message file, which is equivalent for a short message service file (SMS).

According to embodiments of the invention the second type data is security related data. The security related data may for example be a stored and/or generated password, a personal identification number, and/or a security key.

According to embodiments of the invention the chip card is a subscriber identity module or a universal subscriber identity module (SIM/USIM).

According to embodiments of the invention the first data storage portion is a random access memory of the mobile telecommunication device. The second elementary file is used as an input and output buffer for a communication between an application executed on the mobile telecommunication device and the chip card. The data is stored in the first data storage portion by the chip card or by the application executed on the mobile telecommunication device. The data may then be read by the chip card and/or by the application executed on the mobile telecommunication device or by an application executed on the chip card.

According to embodiments of the invention first data is stored in the second elementary file in the first data storage portion by the application. Said first data is read from the second elementary file by the chip card or by an application executed on the chip card. Said first data causes the chip card or the application executed on the chip card to generate second data. Said second data is stored in said second elementary file by the chip card or by the application executed on the chip card. Said second data is read from the second elementary file by the application executed on the mobile telecommunication device. Said first and said second data is second type data.

In accordance with embodiments of the invention an elementary file is used as an input/output buffer for communication between an application executed on the mobile telecommunication device and an application of the SIM Application Toolkit (STK). The elementary file used for this purpose may for example be the elementary file EF_ADN or the elementary file EF_SMS as defined in GSM standards. The application executed on the mobile telecommunication device and the application of the STK both have read and write access to these elementary files.

Such an input/output buffer is for example used when the application executed on the mobile telecommunication device needs to perform security related program steps. This may for example be generation of a personal identification number (PIN). Such an operation is preferably performed by the STK application due to security reasons. Hence, the application executed on the mobile telecommunication device stores instructions for generating a PIN in the input/output buffer. These instructions are then read by the STK application and the STK application generates a PIN. This PIN is then stored by the STK application in the input/output buffer and read by the application executed on the mobile telecommunication device.

Using the elementary file as an input/output buffer for communication of an application executed on the mobile telecommunication device and an STK application allows data transmission between these two applications. It is to be noted that the elementary files EF_ADN and EF_SMS are used as the input/output buffer for any data. This comprises also data not being related to address book data or SMS data.

Storing other data than address book or SMS data in the elementary files is performed by defining the data as invalid address book or SMS data. Thereby, it is avoided that the data is displayed to the user when opening the address book or the SMS storage. At the same time the data is defined as valid other type data. This avoids that the data could be deleted or overwritten with address book or SMS data. There are two possibilities of how to define, which elementary file is used as input/output buffer. First, always one certain elementary file is used as input/output buffer. In this case both applications store information about this elementary file and use this file for writing and reading data. Second, the data stored in the input/output buffer comprises information being indicative of the elementary file being used as input/output buffer.

In another aspect the invention relates to a chip card for a mobile telecommunication device. The chip card comprises a data storage. The data storage comprises a first and a second data storage portion, wherein the first data storage portion is a volatile storage and the second data storage portion is a non-volatile storage. A plurality of first elementary files is provided in the second data storage portion. The chip card is adapted for storing data in the first data storage portion in a second elementary file. The second elementary file is defined as comprising first type data, wherein said data is second type data. Said data comprises first information. The first information is indicative of said second elementary file being invalid. The chip card is further adapted for providing second information. The second information is indicative of said second elementary file comprising second type data. The combination of the first and the second information being present with respect to the data is indicative of the data being valid. In other words, the first and the second information define the data as being valid second type data.

According to embodiments of the invention the chip card is a subscriber identity module or a universal subscriber identity module.

In yet another aspect the invention relates to a mobile telecommunication device for a wireless telecommunication network. The mobile telecommunication device comprises a chip card according to embodiments of the invention.

### Brief description of the drawings

In the following embodiments of the invention are explained in greater detail, by way of example only, making reference to the drawings in which:
- Fig. 1: is a block diagram of a chip card in a mobile telecommunication device, and
- Fig. 2: is a flow diagram of a method of storing data on a chip card for a mobile telecommunication device.

### Detailed description

Like numbered elements in these Figs. are either identical elements or perform the same function. Elements which have been discussed previously will not necessarily be discussed in later Figs. if the function is identical.

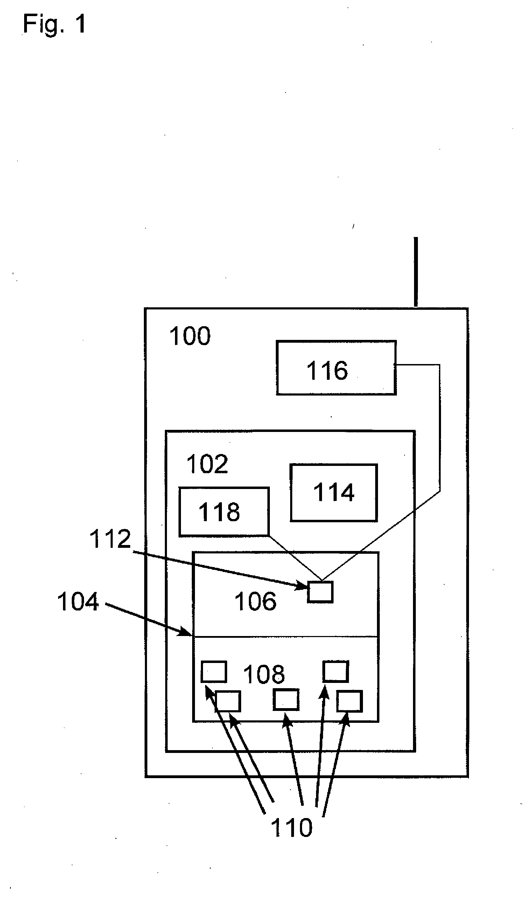

Fig. 1 is a block diagram of a mobile telecommunication device 100. The mobile telecommunication device 100 comprises a chip card 102. The chip card 102 comprises a data storage 104. The data storage 104 comprises a first data storage portion 106 and a second data storage portion 108. The first data storage portion 106 is a volatile storage such as a random access memory (RAM) and the second data storage portion 108 is a non-volatile storage. A plurality of first elementary files 110 is provided in the second data storage portion 108. A second elementary file 112 is provided in the first data storage portion 106.

The chip card 102 further comprises a processor 114. The processor 114 is adapted for storing data in the first elementary files 100 and in the second elementary file 112. The second elementary file 112 is defined as comprising first type data. The first type data may for example be contact data and/or SMS data. SMS data could also be referred to as text message data. In other words, the second elementary file 112 is an elementary file for storing contact and/or text message data. Contact data may for example be names, telephone numbers, e-mail addresses, and/or addresse. The processor 114 is adapted for storing data in the second elementary file 112. The data is second type data. This means that second type data is stored in the second elementary file 112, which is defined as comprising first type data. The second type data may for example be security relevant data such as a personal identification number (PIN), a key, and/or a password.

The processor 114 is further adapted for adding first information to this data. The first information is indicative of the second elementary file 112 being invalid. The first information may for example be the first bit of the data. Setting the second elementary file 112 containing the data as being invalid is advantageous, because the second elementary file 112 does not contain first type data. An application wanting to read first type data from the second elementary file reads first the first information and does not further read from the second elementary file because the second elementary file 112 seems invalid. Such an application could for example be an application executed by the mobile telecommunication device 100 for displaying text message data and/or contact data to a user.

The processor 114 is further adapted for adding second information to the data stored in the second elementary file 112. The second information is indicative of the second elementary file 112 comprising second type data. An application 116 executed on the mobile telecommunication device 100 is adapted for reading second type data from the second elementary file 112. Further, an application 118 executed on the chip card 102 is also adapted for storing and reading data to and from the second elementary file 112. In other words, the second elementary file 112 is used as an input/output buffer for communication between application 116 executed on the mobile telecommunication device 100 and application 118 executed on the chip card 102. Both applications 116 and 118 are adapted for storing and reading data from and to the second elementary file 112. When reading data from the second elementary file 112 applications 116 and 118 continue reading after having read the first information setting the second elementary file as being invalid. Applications 116 and 118 then read the second information. The first and the second information being present with respect to the data stored in the second elementary file 112 is indicative of the second elementary file 112 being valid and containing second type data.

In other words, second type data can be transmitted from application 116 to application 118 and vice versa by using the second elementary file 112 as an input and output buffer. Application 116 may for example be a home banking application and needs to generate a personal identification number. Generating the personal identification number in the chip card is safer than generating it in the mobile telecommunication device 100, because chip card 102 is adapted for treating security relevant data. Application 116 would then write data into second elementary file 112, the data being indicative of the application 118 generating a personal identification number. Application 118 then reads the data stored by application 116 in the second elementary file 112 and generates a personal identification number and stores this personal identification number in second elementary file 112. Application 116 may then read the personal identification number and use it for home banking or another security relevant purpose.

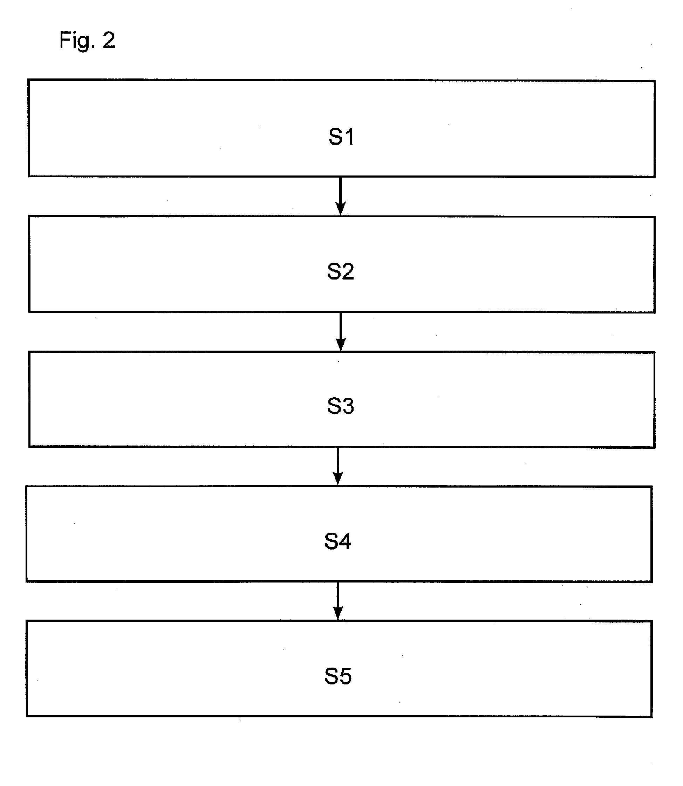

The elementary file 112 is used as input/output buffer for communication between application 116 and application 118. In one embodiment of the invention the elementary file 112 is the EF_ADN or EF_SMS file as defined in GSM standards. Application 116 needs to perform security related program steps, e.g. generation of a personal identification number (PIN). Such an operation is preferably performed by application 118 due to security reasons. Hence, application 116 stores instructions for generating a PIN in the input/output buffer. These instructions are then read by application 118 and application 118 generates a PIN. This PIN is then stored by application 118 in elementary file 112. Application 116 then reads the PIN from elementary file 112. In other, words executing security relevant program steps may be outsourced from application 116 to application 118 by using elementary file 112 as input/output buffer. Fig. 2 is a flow diagram of a method according to embodiments of the invention. In a first step S1 application 116 of Fig. 1 executed on the mobile telecommunication device stores data in the second elementary file 112 of Fig. 1. First and second information are comprised by the data stored in the second elementary file. The first information is indicative of the second elementary file being invalid and the second information is indicative of the second elementary file comprising second type data.

In a second step S2 application 118 executed on chip card 102 (see Fig. 1) reads the data from the second elementary file. The application executed on the chip card reads the first and the second information. The first and the second information being present in the second elementary file are indicative of the second elementary file comprising second type data and being valid for the application executed on the chip card.

After having read the data, the data may cause the application executed on the chip card to generate data in a third step S3. The generated data is then stored in step S4 by the application executed on the chip card in the second elementary file. This data also comprises first and second information being together indicative of the second elementary file being valid and comprising second type data. The data stored in the second elementary file by the application executed on the chip card is then read in step S5 by the application executed on the mobile telecommunication device. The application executed on the mobile telecommunication device reads the first and the second information, which are indicative of the second elementary file comprising second type data and being valid.

The second elementary file is used for communication between the application executed on the mobile telecommunication device and the application executed on the chip card as an input and output buffer. This is especially advantageous, if the application executed on the mobile telecommunication device causes the application executed on the chip card to generate security relevant data.

### List of Reference Numerals

| | |
|---|---|
| 100 | Mobile telecommunication device |
| 102 | Chip card |
| 104 | Storage |
| 106 | First data storage portion |
| 108 | Second data storage portion |
| 110 | First elementary files |
| 112 | Second elementary file |
| 114 | Processor |
| 116 | Application |
| 118 | Application |

## Claims

1. A method of storing data on a chip card (102) for a mobile telecommunication device (100), wherein the chip card comprises:
- a data storage (104), the data storage comprising a first (106) and a second (108) data storage portion, wherein the first data storage portion is a volatile storage and the second data storage portion is a non-volatile storage, wherein a plurality of first elementary files (110) is provided in the second data storage portion;
wherein the method comprises the steps of:
- storing (S1 ; S4) data in the first data storage portion in a second elementary file (112), said second elementary file being defined as comprising first type data, wherein said data is second type data, wherein said data comprises first information, the first information being indicative of said second elementary file being invalid, and
- providing (S2; S5) second information, wherein the second information is indicative of said second elementary file comprising second type data, whereby the combination of the first and the second information being present with respect to the data is indicative of the data being valid.

2. Method according to claim 1, wherein said second information is a file number of the second elementary file.

3. Method according to claim 1, wherein said second information is at least one bit of said data.

4. Method according to any one of the preceding claims, wherein the second elementary file is stored in the first data storage portion.

5. Method according to any one of the preceding claims, wherein the first type data is address data and/or text message data.

6. Method according to any one of the preceding claims, wherein said second elementary file is an address book file and/or a text message file.

7. Method according to any one of the preceding claims, wherein the second type data is security-related data.

8. Method according to any one of the preceding claims, wherein the chip card is a subscriber identity module or a universal subscriber identity module.

9. Method according to any one of the preceding claims,
wherein the first data storage portion is a random access memory of the mobile telecommunication device,
wherein said second elementary file is used as an input and output buffer for a communication between an application executed on the mobile telecommunication device and the chip card, and
wherein said data is stored in the first data storage portion by the chip card or by the application.

10. Method according to claim 9,
wherein first data is stored in said second elementary file in the first data storage portion by the application,
wherein said first data is read from the second elementary file by the chip card,
wherein reading said first data causes the chip card to generate second data,
wherein said second data is stored in said second elementary file by the chip card,
wherein said second data is read from the second elementary file by the application,
wherein said first and second data is second type data.

11. A chip card (102) for a mobile telecommunication device (100), wherein the
chip card comprises:
- a data storage (104), the data storage comprising a first (106) and a second data storage portion (108), wherein the first data storage portion is a volatile storage and the second data storage portion is a non-volatile storage, wherein a plurality of first elementary files (110) is provided in the second data storage portion;
wherein the chip card comprises means (114; 118) for:
- storing data in the first data storage portion in a second elementary file, said second elementary file being defined as comprising first type data, wherein said data is second type data, wherein said data comprises first information, the first information being indicative of said second elementary file being invalid, and
- providing second information, wherein the second information is indicative of said second elementary file comprising second type data, whereby the combination of the first and the second information being present with respect to the data is indicative of the data being valid.

12. Chip card according to claim 11, wherein the chip card is a subscriber identity module or a universal subscriber identity module.

13. Mobile telecommunication device (100) for a wireless telecommunication network, wherein the mobile telecommunication device comprises a chip card according to claim 11 or 12.

## Patentansprüche

1. Verfahren zum Speichern von Daten auf einer Chipkarte (102) für eine mobile Telekommunikationsvorrichtung (100), wobei die Chipkarte umfasst:
- einen Datenspeicher (104), wobei der Datenspeicher einen ersten (106) und einen zweiten (108) Datenspeicherabschnitt aufweist, wobei der erste Datenspeicherabschnitt ein flüchtiger Speicher ist und der zweite Datenspeicherabschnitt ein nicht-flüchtiger Speicher ist, wobei - mehrere erste Elementardateien (110) im zweiten Datenspeicherabschnitt bereitgestellt werden;
wobei das Verfahren die folgenden Schritte umfasst:
- Speichern (S1; S4) von Daten im ersten Datenspeicherabschnitt in einer zweiten Elementardatei (112), wobei die zweite Elementardatei so definiert ist, dass sie Daten eines ersten Typs umfasst, wobei die Daten Daten eines zweiten Typs sind, wobei die Daten erste Informationen umfassen, wobei die ersten Informationen angeben, dass die zweite Elementardatei ungültig ist, und
- Bereitstellen (S2; S5) von zweiten Informationen, wobei die zweiten Informationen angeben, dass die zweite Elementardatei Daten eines zweiten Typs umfasst, wodurch die Kombination aus den ersten und den zweiten Informationen, die in Bezug auf die Daten vorliegt, angibt, dass die Daten gültig sind.

2. Verfahren nach Anspruch 1, wobei es sich bei den zweiten Informationen um eine Dateinummer der zweiten Elementardatei handelt.

3. Verfahren nach Anspruch 1, wobei die zweiten Informationen mindestens ein Bit der Daten umfassen.

4. Verfahren nach einem der vorangehenden Ansprüche, wobei die zweite Elementardatei im ersten Datenspeicherabschnitt gespeichert wird.

5. Verfahren nach einem der vorangehenden Ansprüche, wobei die Daten des ersten Typs Addressdaten und/oder Textnachrichtendaten sind.

6. Verfahren nach einem der vorangehenden Ansprüche, wobei die zweite Elementardatei eine Addressbuchdatei und/oder eine Textnachrichtendatei ist.

7. Verfahren nach einem der vorangehenden Ansprüche, wobei die Daten des zweiten Typs sicherheitsrelevante Daten sind.

8. Verfahren nach einem der vorangehenden Ansprüche, wobei die Chipkarte ein Teilnehmeridentitätsmodul oder ein universelles Teilnehmeridentitätsmodul ist.

9. Verfahren nach einem der vorangehenden Ansprüche,
wobei der erste Datenspeicherabschnitt ein Schreib-/Lesespeicher der mobilen Telekommunikationsvorrichtung ist,
wobei die zweite Elementardatei als Eingabe- und Ausgabepuffer für eine Kommunikation zwischen einer Anwendung, die auf der mobilen Telekommunikationsvorrichtung ausgeführt wird, und der Chipkarte verwendet wird, und
wobei die Daten von der Chipkarte oder von der Anwendung im ersten Datenspeicher gespeichert werden.

10. Verfahren nach Anspruch 9,
wobei die ersten Daten von der Anwendung in der zweiten Elementardatei im ersten Speicherabschnitt gespeichert werden,
wobei die ersten Daten von der Chipkarte aus der zweiten Elementardatei gelesen werden,
wobei das Auslesen der ersten Daten bewirkt, dass die Chipkarte zweite Daten erzeugt,
wobei die zweiten Daten von der Chipkarte in der zweiten Elementardatei gespeichert werden,
wobei die zweiten Daten von der Anwendung aus der zweiten Elementardatei gelesen werden,
wobei die ersten und die zweiten Daten Daten eines zweiten Typs sind.

11. Chipkarte (102) für eine mobile Telekommunikationsvorrichtung (100), wobei die Chipkarte umfasst:
- einen Datenspeicher (104), wobei der Datenspeicher einen ersten (106) und einen zweiten (108) Datenspeicherabschnitt aufweist, wobei der erste Datenspeicherabschnitt ein flüchtiger Speicher ist und der zweite Datenspeicherabschnitt ein nicht-flüchtiger Speicher ist, wobei-mehrere erste Elementardateien (110) im zweiten Datenspeicherabschnitt bereitgestellt sind;
wobei die Chipkarte eine Einrichtung (114; 118) umfasst zum
- Speichern von Daten im ersten Datenspeicherabschnitt in einer zweiten Elementardatei, wobei die zweite Elementardatei so definiert ist, dass sie Daten eines ersten Typs umfasst, wobei die Daten Daten eines zweiten Typs sind, wobei die Daten erste Informationen umfassen, wobei die ersten Informationen anzeigen, dass die zweite Elementardatei ungültig ist, und
- Bereitstellen von zweiten Informationen, wobei die zweiten Informationen angeben, dass die zweite Elementardatei Daten des zweiten Typs umfasst, wodurch die Kombination aus den ersten und den zweiten Informationen, die in Bezug auf die Daten vorliegen, anzeigt, dass die Daten gültig sind.

12. Chipkarte nach Anspruch 11, wobei die Chipkarte ein Teilnehmeridentitätsmodul oder ein universelles Teilnehmeridentitätsmodul ist.

13. Mobile Telekommunikationsvorrichtung (100) für ein drahtloses Kommunikationsnetz, wobei die mobile Telekommunikationsvorrichtung eine Chipkarte nach Anspruch 11 oder 12 umfasst.

## Revendications

1. Procédé pour le stockage de données sur une carte à puce (102) pour un dispositif de télécommunication mobile (100), dans lequel la carte à puce comprend :
- un moyen de stockage de données (104), le moyen de stockage de données comprenant une première (106) et une deuxième (108) partie de stockage de données, où la première partie de stockage de données est un moyen de stockage volatile et la deuxième partie de stockage de données est un moyen de stockage non-volatile, où une pluralité de premiers fichiers élémentaires (110) est fournie dans la deuxième partie de stockage de données ;
le procédé comprenant les étapes suivantes :
- stockage (S1 ; S4) de données dans la première partie de stockage de données dans un deuxième fichier élémentaire (112), ledit deuxième fichier élémentaire étant défini comme comprenant des données de premier type, où lesdites données sont des données de deuxième type, lesdites données comprenant une première information, la première information indiquant que ledit deuxième fichier élémentaire est invalide, et
- mise à disposition (S2 ; S5) d'une deuxième information, la deuxième information indiquant que ledit deuxième fichier élémentaire comprend des données de deuxième type, où la combinaison de la première et de la deuxième information présentes par rapport aux données indique que les données sont valides.

2. Procédé selon la revendication 1, dans lequel ladite deuxième information est un numéro de fichier du deuxième fichier élémentaire.

3. Procédé selon la revendication 1, dans lequel ladite deuxième information est au moins un bit desdites données.

4. Procédé selon l'une quelconque des revendications précédentes, dans lequel le deuxième fichier élémentaire est stocké dans la première partie de stockage de données.

5. Procédé selon l'une quelconque des revendications précédentes, dans lequel les données de premier type sont des données d'adresse et/ou des données de message texte.

6. Procédé selon l'une quelconque des revendications précédentes, dans lequel ledit deuxième fichier élémentaire est un fichier de carnet d'adresses et/ou un fichier de message texte.

7. Procédé selon l'une quelconque des revendications précédentes, dans lequel les données de deuxième type sont des données relatives à la sécurité.

8. Procédé selon l'une quelconque des revendications précédentes, dans lequel la carte à puce est un module d'identité d'abonné ou un module d'identité d'abonné universel.

9. Procédé selon l'une quelconque des revendications précédentes,
dans lequel la première partie de stockage de données est une mémoire vive du dispositif de télécommunication mobile,
dans lequel ledit deuxième fichier élémentaire est utilisé comme tampon d'entrée et de sortie pour une communication entre une application exécutée sur le dispositif de télécommunication mobile et la carte à puce, et
dans lequel lesdites données sont stockées dans la première partie de stockage de données par la carte à puce ou par l'application.

10. Procédé selon la revendication 9,
dans lequel des premières données sont stockées par l'application dans ledit deuxième fichier élémentaire dans la première partie de stockage de données,
dans lequel lesdites premières données sont lues par la carte à puce à partir du deuxième fichier élémentaire,
dans lequel la lecture desdites premières données amène la carte à puce à générer des deuxièmes données, dans lequel lesdites deuxièmes données sont stockées par la carte à puce dans ledit deuxième fichier élémentaire,
dans lequel lesdites deuxièmes données sont lues par l'application à partir du deuxième fichier élémentaire,
dans lequel lesdites premières et deuxièmes données sont des données de deuxième type.

11. Carte à puce (102) pour un dispositif de télécommunication mobile (100), la carte à puce comprenant :
- un moyen de stockage de données (104), le moyen de stockage de données comprenant une première (106) et une deuxième (108) partie de stockage de données, où la première partie de stockage de données est un moyen de stockage volatile et la deuxième partie de stockage de données est un moyen de stockage non-volatile, où une pluralité de premiers fichiers élémentaires (110) est fournie dans la deuxième partie de stockage de données ;
la carte à puce comprenant des moyens (114 ; 118) pour :
- stocker des données dans la première partie de stockage de données dans un deuxième fichier élémentaire, ledit deuxième fichier élémentaire étant défini comme comprenant des données de premier type, où lesdites données sont des données de deuxième type, lesdites données comprenant une première information, la première information indiquant que ledit deuxième fichier élémentaire est invalide, et
- mettre à disposition une deuxième information, la deuxième information indiquant que ledit deuxième fichier élémentaire comprend des données de deuxième type, où la combinaison de la première et de la deuxième information présentes par rapport aux données indique que les données sont valides.

12. Carte à puce selon la revendication 11, la carte à puce étant un module d'identité d'abonné ou un module d'identité d'abonné universel.

13. Dispositif de télécommunication mobile (100) pour un réseau de télécommunication sans fil, le dispositif de télécommunication mobile comprenant une carte à puce selon la revendication 11 ou 12.
